# FASCICULE DE BREVET EUROPEEN

(11) **EP 1 785 650 B1**
(45) Date de publication et mention de la délivrance du brevet: **11.03.2009**
(21) Numéro de dépôt: 06124099.0
(22) Date de dépôt: 15.11.2006
(51) Int. Cl.: F16J 15/44, F01D 11/00, B23H 9/10

(54) **Procédé de réalisation d'une léchette de labyrinthe d'étanchéité, pièce thermomécanique et turbomachine comprenant une telle léchette**
Herstellungsverfahren einer Labyrinthschneidendichtung, thermomechanisches Teil und Turbomaschine mit einer solchen Dichtung
Manufacturing method of a labyrinth knife edge seal, thermomechanical part and turbomachine comprising such a seal

(30) Priorité: 15.11.2005 FR 0511580
(43) Date de publication de la demande: 16.05.2007
(73) Titulaire: SNECMA, 75015 Paris (FR)
(72) Inventeur: Mons, Claude, 77176 Savigny le Temple (FR); Vigneau, Joël, 91750 Champcueil (FR)
(74) Mandataire: Cardy, Sophie Marie

(56) Documents cités:
- WO-A-20/05053860
- DE-A1- 19 957 771
- US-A- 4 657 171
- US-A- 5 038 014
- US-A- 5 554 837
- US-A1- 2005 029 235

## Description

L'invention concerne un procédé de réalisation d'une léchette annulaire sur un support thermomécanique, en particulier pour une léchette de labyrinthe d'étanchéité, une pièce thermomécanique comprenant une telle léchette annulaire et une turbomachine comprenant une telle pièce thermomécanique.

Un labyrinthe d'étanchéité, encore appelé joint labyrinthe, comprend une partie tournante à ailettes (ou léchettes) avec un alésage statique recouvert d'un matériau abradable mou, ou une structure en nid d'abeilles capable de résister à des températures élevées. Au démarrage du moteur, les ailettes du joint frottent légèrement contre la garniture, mordant dans cette dernière, ce qui aboutit à un écartement minimum. Ce jeu varie au cours des différents cycles de vol, selon la dilatation des pièces et la souplesse naturelle des parties mobiles.

Les léchettes de labyrinthes permettent d'assurer les étanchéités aérodynamiques entre des enceintes d'air sous des pressions différentes. Elles sont en général situées sur la partie rotor en vis-à-vis de parties statoriques. Elles sont constituées principalement de « lames » continues ou segmentées de forme annulaire, pouvant être dirigées radialement vers l'intérieur ou vers l'extérieur.

En particulier, lorsqu'elles présentent une forme continue, les léchettes sont susceptibles d'entrer en contact avec le stator dans certaines configurations de fonctionnement. Pour éviter leur destruction dans ces situations, on équipe les stators de revêtements permettant l'interface et qui sont dénommés « abradables ». Dans ce cas, les séquences usuelles de pénétration des léchettes dans les abradables consistent en une coupe radiale associée à un déplacement axial («chariotage»).

Les matériaux abradables usuels peuvent se révéler en réalité relativement abrasifs, particulièrement vis-à-vis de certaines léchettes continues, surtout si celles-ci sont réalisées en alliage à base de titane, mais aussi en acier ou en alliage à base de nickel. C'est notamment particulièrement vrai pour les abradables réalisés sous la forme de nids d'abeilles en alliage réfractaire.

Pour éviter les détériorations, voir les destructions, des léchettes, habituellement on revêt celles-ci par projection thermique (torche à plasma, à flamme oxygène à haute vitesse HVOF, ...) d'un dépôt abrasif de type alumine/bioxyde de titane ou carbure, par exemple sur une sous-couche d'alliage aluminium et nickel, pour en assurer l'adhérence.

Le dépôt par projection thermique requiert de respecter des angles relatifs de projection entre l'axe de la torche et les surfaces des pièces à revêtir, de manière à ce que l'impact des particules projetées soit le plus orthogonal possible par rapport à la surface à revêtir afin d'obtenir une qualité et une adhérence du dépôt satisfaisantes. Également, cette technique exige une distance minimale entre l'outil de projection et la surface : en effet la zone centrale chaude du dard de la torche est à plusieurs milliers de degrés centigrades et il faut donc la tenir suffisamment éloignée de la pièce ; en outre, les particules à déposer doivent être suffisamment accélérées pour adhérer sur les surfaces à protéger.

Par ailleurs, les gaz propulseurs ou plasmagènes utilisés pour la projection doivent pouvoir être aisément évacués sans toutefois «souffler» la poudre projetée en créant des turbulences.

Le document DE 199 57 771 vise la réparation d'une léchette annulaire destinée à un labyrinthe d'étanchéité, à l'aide d'un procédé de dépôt d'un matériau pour soudage laser.

En général, les léchettes sont orientées quasiment de façon orthogonale aux surfaces cylindriques des rotors, et elles sont souvent situées au voisinage de toiles de disques ou de labyrinthes, au fond de cavités ou à proximité d'autres léchettes lorsqu'elles sont disposées en série.

Parmi ces situations, nombreux sont les cas qui présentent un agencement géométrique qui rend la réalisation de dépôt par projection thermique très aléatoire ou quasiment impossible.

Il en résulte que le revêtement abrasif est déposé préférentiellement uniquement sur l'extrémité (pointe) de la léchette dont les parois sont finalement mal protégées, ce qui entraîne une usure plus rapide de la léchette.

La présente invention a pour but de surmonter cet inconvénient en proposant une solution qui permette de s'affranchir de la réalisation de dépôt par projection thermique afin de pouvoir tout de même réaliser des léchettes qui ne sont pas endommagées par leur contact avec la couronne d'abradable.

Ce but de l'invention est atteint par le procédé de réalisation d'une léchette annulaire sur un support thermomécanique, pour un labyrinthe d'étanchéité,
comportant l'étape suivante :
a) on fournit un support de révolution autour d'un axe longitudinal présentant une base de léchette annulaire, et caractérisé en ce qu'il comporte en outre les étapes suivantes :
b) on fournit une buse de projection apte à se déplacer par rapport au support et une première source d'un premier matériau en poudre identique à celui du support et une deuxième source d'un deuxième matériau en poudre plus dur que le premier matériau, ladite première source et ladite deuxième source étant reliées à la buse de projection;
c) on fournit une source laser reliée à une tête optique apte à se déplacer par rapport au support pour focaliser le faisceau laser sur un point de la surface du support ;
d) on règle la tête optique et la buse sur un même point de la surface du sommet de la base de la léchette,
e) on active la source laser et les sources de matériau en poudre, ce par quoi on forme un bain de fusion localisé au niveau dudit point, dans lequel est injecté le matériau en poudre d'où il en résulte la formation d'une surépaisseur localisée ;
f) on règle la tête optique et la buse sur un autre point de la surface du sommet de la base adjacent à ladite surépaisseur localisée et on retourne à l'étape e) jusqu'à la formation d'une couche sur sensiblement toute la largeur du sommet de la base ;
g) on construit au moins une portion de la pointe de la léchette par le dépôt successif de couches annulaires de plus en plus étroites en direction longitudinale sur le sommet de la base, chaque couche résultant de la réalisation des étapes d) à f) et comprenant, à ses deux bords, un cordon annulaire appartenant au revêtement de la pointe de la léchette et constitué majoritairement du deuxième matériau, et une zone remplissant l'espace délimité entre deux cordons annulaires et appartenant à l'âme de la pointe de la léchette, ladite zone étant constitué majoritairement du premier matériau.

On comprend de ce qui précède qu'il est proposé de remplacer le dépôt sur la surface de la léchette d'un revêtement abrasif réalisé par projection thermique, par une construction complète de cette léchette, ou tout du moins une partie de la hauteur de la partie saillante ou pointe de cette léchette, en ayant recours à une projection laser.

La projection laser consiste à créer sur la pièce un bain de fusion très localisé, par action d'un faisceau laser pouvant être réglé de façon très précise, et à injecter dans ce bain de fusion de la poudre (métallique et/ou céramique), qui peut être abrasive. Ainsi, contrairement à la projection thermique, il n'est pas nécessaire de chauffer la poudre, sa trajectoire pouvant donc être dissociée de celle du faisceau laser.

Le faisceau laser se propage depuis sa source jusqu'à la cible par un chemin optique. Ce chemin optique est matérialisé soit pas une succession de miroirs qui reçoivent le faisceau et le renvoient dans une direction différente et de lentilles optiques et qui le font converger ou diverger ou le maintiennent parallèles, soit pas une fibre optique.

Dans les deux cas, le chemin optique se termine par un système de lentilles appelées « tête optique » qui fait converger le faisceau en un point plus ou moins éloigné. Des zones peu accessibles de la pièce avec le dispositif à torche utilisé pour réaliser une projection thermique peuvent maintenant être atteintes par un dispositif à projection laser, dès lors qu'il n'y a pas d'obstacle entre la tête optique et le point d'impact visé par le faisceau sur la pièce. En effet, dans le cas d'une projection thermique, il est nécessaire que la poudre arrive avec une direction d'impact normale à la surface à revêtir. De façon tout à fait différente, avec le procédé proposé selon la présente invention, la projection laser ne nécessitant que le remplissage du bain de fusion, la poudre peut être envoyée avec des trajectoires tout à fait variables par rapport à la surface de réception.

La poudre métallique est distribuée par un distributeur de poudre. Elle chemine dans un tube dont l'extrémité comporte une buse qui dirige la poudre vers le bain de fusion créé par le faisceau laser. Ce tube peut être souple est guidé par un bras rigide support ou par un robot ou tout autre dispositif de positionnement, ou bien elle peut être rigide et orientée vers la zone à revêtir de la pièce.

On peut relever d'autres différences entre les procédés de projection thermique et de projection laser.

Dans le cas de la projection thermique, la buse transmettant les gaz chauds doit être proche de la surface à revêtir, tandis que dans le cas de la projection laser, la tête optique peut être relativement éloignée de cette surface. Dans le cas de la projection thermique, la poudre doit être chauffée de sorte qu'elle doit présenter une trajectoire commune avec les gaz chauds, ce qui n'est pas le cas avec une projection laser dans laquelle la trajectoire de la poudre peut être dissociée de celle du faisceau laser.

En outre, dans le cas de la projection thermique, on réalise un procédé de revêtement continu alors que dans le cas d'une projection laser, compte tenu de la souplesse de commande du faisceau laser, il est possible de réaliser la projection de façon continue ou de façon séquentielle, par un simple arrêt du faisceau laser.

En outre, on comprend que la solution conforme à la présente invention évite d'avoir à usiner la pointe de la léchette, qui est un emplacement relativement délicat à réaliser. En effet, grâce au procédé conforme à la présente invention, on construit simultanément, couche par couche, la pointe de la léchette et son revêtement avec un matériau suffisamment abrasif.

À cet égard, il faut noter que ce procédé peut réaliser la construction de la léchette sur toute sa hauteur (dans ce cas, la base de léchette annulaire est simplement un tronçon annulaire de la surface extérieure du support, par exemple du rotor) ou bien uniquement la construction de la léchette sur une partie de sa hauteur formant son extrémité ou sa pointe (dans ce cas, la base de léchette annulaire présente un volume annulaire s'étendant sur une certaine hauteur et provient d'un usinage préalable).

Dans l'étape e) l'activation de la source laser et de la source de matériau en poudre est effectuée successivement ou quasi simultanément afin que le bain de fusion localisé soit présent à l'emplacement sur lequel est dirigé le faisceau laser lorsque la poudre, qui arrive sur ce même emplacement, vient impacter cette surface.

De préférence, on réalise les étapes d) à f) tant que toute la surface du sommet de la base n'est pas revêtue d'une couche et en ce que pendant l'étape g) on construit la partie saillante de la léchette par le dépôt successif de couches de plus en plus étroites en direction longitudinale sur toute la surface du sommet de la base, chaque couche résultant de la réalisation des étapes d) à f).

En effet, il est préférable de construire la léchette strate par strate, en réalisant en premier lieu une nouvelle couche sur toute la surface du sommet de la léchette avant de continuer cette construction radialement plus à l'extérieur.

Néanmoins, on peut concevoir d'autres méthodes de construction, parmi lesquels la construction couche par couche d'un secteur angulaire avant de poursuivre la construction d'un autre secteur angulaire, ou encore, au moyen de plusieurs têtes optiques et de plusieurs buses, la fabrication simultanée de plusieurs secteurs angulaires de la léchette.

De préférence, pendant l'étape f), on parcourt la surface du sommet de la base de la léchette selon une direction longitudinale avant de changer de secteur angulaire.

Dans ce cas, on construit chaque couche ligne par ligne en déplaçant, le long de cette ligne, le réglage de la tête optique et de la buse (ou en déplaçant le support par rapport à l'appareillage de projection laser) parallèlement à la direction longitudinale parallèle à l'axe de révolution, avant d'effectuer un décalage angulaire et de commencer une nouvelle ligne jusqu'à la fin de la réalisation d'une couche.

Bien entendu, on peut concevoir d'autres trajectoires de déplacement pour construire chaque couche, par exemple en effectuant, à la suite les uns des autres, la fabrication de cordons annulaires qui seront décalés légèrement en direction longitudinale les uns par rapport aux autres.

Selon une autre disposition préférentielle, au cours de l'étape f) la source laser et la source de matériau en poudre restent activées.

De cette façon, on peut réaliser en continu la construction de la léchette par formation d'îlots successifs de matière, soit pour la formation complète de la léchette, soit par séquence correspondant chacune à la fabrication d'une partie (par exemple une couche complète de la léchette). Alternativement ou en combinaison avec ces différentes possibilités, on peut également, notamment dans les zones les plus délicates à atteindre et/ou les plus fines au niveau des dimensions, réaliser un dépôt de matière point après point en désactivant la source laser et la source de matériau au cours de l'étape f).

L'invention concerne aussi une pièce thermomécanique comprenant au moins une léchette annulaire destinée à un labyrinthe d'étanchéité et montée sur un support, ladite léchette étant obtenue par le procédé conforme à la présente invention présenté précédemment, la pièce thermomécanique formant ledit support, ladite léchette annulaire étant formée d'une base surmontée d'une pointe, caractérisée en ce que la pointe est composée d'une âme constituée majoritairement du premier matériau qui est le même matériau que celui du support et d'un revêtement recouvrant toute l'âme et constitué majoritairement du deuxième matériau qui est plus dur que le premier matériau.

Comme il ressort de l'exposé ci-dessus du procédé conforme à l'invention, il faut comprendre que cette léchette est fabriquée entièrement (sur toute sa hauteur) ou seulement en partie, à savoir sa partie d'extrémité annulaire constituant le sommet, par ce procédé.

Dans le dernier cas, la partie radialement intérieure de la léchette est formée d'une base préalablement usinée directement dans le support.

En particulier, cette pièce thermomécanique constitue le rotor d'une turbomachine.

Egalement, la présente invention porte sur une turbomachine comprenant une pièce thermomécanique du type cité précédemment.

L'invention sera bien comprise et ses avantages apparaîtront mieux à la lecture de la description détaillée qui suit, d'un mode de réalisation de l'invention représenté à titre d'exemple non limitatif.

La description se réfère aux dessins annexés sur lesquels:
- la figure 1 montre une demi coupe axiale d'un rotor de turbine d'un turboréacteur avec la disposition du flasque et des labyrinthes d'étanchéité en amont des injecteurs principaux,
- les figures 2 et 3 représentent une vue en coupe axiale schématique partielle et agrandie d'une pièce thermomécanique de révolution montrant l'évolution de la section transversale et du profil de la léchette lors d'une mise en oeuvre du procédé conforme à la présente l'invention, et
- la figure 4 représente une vue en coupe transversale de la pièce thermomécanique de révolution montrant le flanc de la léchette après sa réalisation conformément à la présente invention.

La présente invention portant sur des léchettes d'étanchéité d'une pièce thermomécanique de révolution de turboréacteur, en particulier pour un rotor, on décrit ci-après une application possible, non limitative, de cette forme de léchette conforme à la présente invention.

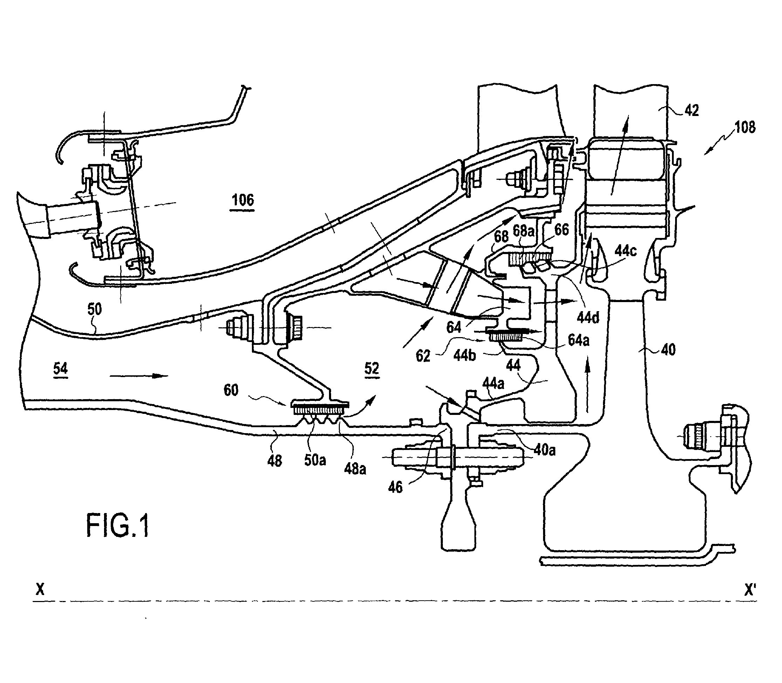

La figure 1 représente un cas dans lequel les léchettes sont utilisées dans les labyrinthes étanchéité et sont disposées en face d'éléments abradables. Il s'agit du cas du circuit de ventilation d'une turbine à haute pression disposée en aval d'une chambre de combustion 106.

En particulier, on y trouve une turbine 108 avec son rotor de révolution, mobile en rotation autour d'un axe X-X'.

Le rotor de la turbine 108 comporte un disque de turbine 40 équipé d'aubes 42, et un flasque 44 disposé en amont du disque 40. Le disque 40 et le flasque 44 comportent chacun une bride amont, référencée 40a pour le disque 40 et 44a pour le flasque 44, pour leur fixation à l'extrémité aval 46 du cône aval 48 du compresseur haute pression entraîné par le rotor de la turbine 108.

Cet agencement de circuit de refroidissement comporte trois labyrinthes successifs de décharge.

Un premier labyrinthe de décharge 60 est formé en amont de l'enceinte 52 séparant le flasque 44 du fond de chambre et en aval de l'enceinte 54 séparant le cône aval 48 du compresseur à haute pression du carter intérieur 50 de la chambre de combustion 106. Ce premier labyrinthe de décharge 60 comprend des léchettes 48a formée sur le cône aval 48 et une couronne 50a de matériau abradable montée à l'extrémité d'un flasque solidaire du carter intérieur 50.

Un deuxième labyrinthe de décharge 62 est situé sous des injecteurs 64, en aval de l'enceinte 52. Ce deuxième labyrinthe de décharge 62 est formé de léchettes 44b du flasque 44 et d'une couronne de matériau abradable 64a montée sur les injecteurs 64.

Le troisième labyrinthe de décharge 66 est situé au-dessus des injecteurs 64, et comporte trois léchettes 44c successives formées sur une portion coudée 44d du flasque 44 et une couronne d'étanchéité abradable 68a montée sur le carter intérieur 68.

Selon l'invention, toutes ou une partie de ces différentes léchettes 48a, 44b et 44c ne sont pas revêtues par projection thermique mais sont construites par projection laser.

Sur la figure 1, l'application de la présente invention est représentée en relation avec une turbine haute pression. Toutefois, il faut comprendre que la présente invention peut être mise en oeuvre dans d'autres zones d'une turbomachine, notamment dans un compresseur haute pression, un compresseur basse pression ou une turbine basse pression.

Également, sur la figure 1, les léchettes sont disposées sur un rotor mobile en étant toutes dirigées radialement en direction de l'extérieur. Cependant, on conçoit tout à fait que la présente invention peut également s'appliquer à des léchettes dirigées radialement en direction de l'axe de rotation.

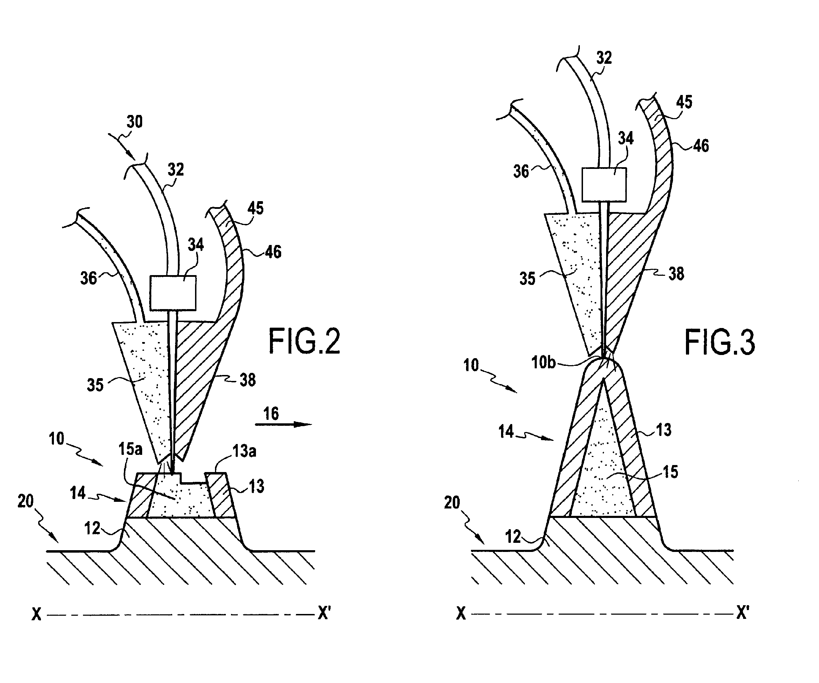

À titre d'exemple, un mode de réalisation conforme à la présente invention va maintenant être décrit en relation avec les figures 2 à 4.

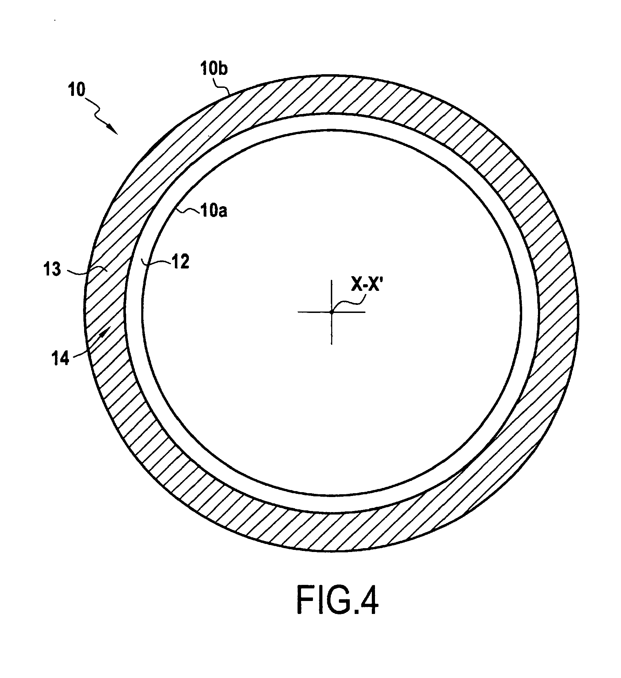

Sur la figure 4, on retrouve l'axe de rotation X-X' autour duquel s'étend radialement une léchette 10 présentant un contour intérieur circulaire 10a d'axe X-X' et un contour extérieur 10b circulaire d'axe X-X'.

En section longitudinale par rapport à l'axe X-X*'*, le profil extérieur de la léchette 10 présente, comme il apparaît sur la figure 3, sensiblement une forme de V inversé ou de U inversé avec les branches du U inclinées en direction du sommet de la léchette délimité par le contour extérieur 10b.

Cette description correspond donc à la même forme annulaire qu'une léchette de l'art antérieur, c'est-à-dire qui présente une hauteur constante le long de sa circonférence, avec un profil sensiblement en forme de U ou de V inversé.

Cependant, comme il a déjà été exposé précédemment, selon les techniques de l'art antérieur, la léchette est usinée directement dans le support selon la forme rappelée ci-dessus, puis cette léchette est revêtue par un dépôt réalisé par projection thermique afin de renforcer ses propriétés de résistance à l'abrasion.

Au contraire, selon la présente invention, le support 20 a seulement été usiné afin de réaliser une base 12 faisant saillie de la surface supérieure du support 20 au plus de quelques millimètres afin d'amorcer le début de la forme de la léchette 10.

Ensuite, on utilise, pour la fabrication du reste de la léchette 10, à savoir son extrémité ou pointe 14, un appareillage (non entièrement représenté) permettant de réaliser une projection laser.

Cet appareillage comporte les parties suivantes :
- un système permettant de saisir le support 20 et de le déplacer, notamment en rotation et en translation;
- une source laser (CO2 ou YAG) 30 avec un système de transmission du faisceau laser 32 par réflexion sur des miroirs ou par une fibre optique, jusqu'à une tête optique 34 ;
- la tête optique 34 présente une distance focale correspondant à la distance entre cette dernière et la surface à revêtir, cette tête optique 34 est solidaire d'un dispositif de positionnement capable de la placer de façon à ce que le point focal du faisceau puisse balayer tous les points d'une section droite de la surface à revêtir, ou du volume à construire ;
- au moins une source d'un premier matériau en poudre 35 comportant un distributeur et un doseur de poudre ainsi que le tuyau d'alimentation 36 de cette poudre jusqu'à la buse 38.

Dans le cas représenté on dispose également d'une source d'un deuxième matériau en poudre 45 reliée à la buse 38 par un tuyau d'alimentation 46 correspondant.

Ainsi, on comprend que de préférence, on fournit une première source d'un premier matériau en poudre 35 et une deuxième source d'un deuxième matériau en poudre 45, ladite première source et ladite deuxième source étant reliées à la buse de projection 38.

Dans le cas représenté schématiquement sur les figures 2 et 3, la tête optique 34 et la buse 38 forment un même ensemble, c'est-à-dire que la tête optique 34 et la buse 38 de projection sont solidaires l'une de l'autre dans un même ensemble de projection dont la position est réglable par rapport au support 20.

Cependant la buse 38 peut également être située séparément à côté du faisceau laser en étant supportée par un dispositif de positionnement qui lui est propre afin de lui permettre de suivre les mouvements du point de focalisation du faisceau laser.

En relation avec la figure 2, il faut comprendre que la construction de la pointe 14 de la léchette 10 s'effectue couche par couche jusqu'à l'extrémité libre de la pointe 14 délimitant le contour extérieur 10b.

Pour chaque couche, de préférence, on réalise en premier lieu par fusion du deuxième matériau en poudre 45 deux cordons annulaires 13a le long des deux bords longitudinaux du sommet de la base 12 (ou de la couche réalisée précédemment), puis on remplit par apport du premier matériau en poudre 35 dans le bain de fusion localisé engendré par le faisceau laser, l'espace en forme de cuvette formé entre ces deux cordons annulaires, ce qui permet de construire une zone 15a qui va constituer au final l'âme 15.

De cette façon, couche par couche, les cordons annulaires 13a forment un revêtement 13 et les zones 15a forment l'âme 15 de la léchette 10, la dernière couche étant formée de la simple juxtaposition de deux cordons annulaires 13a du deuxième matériau en poudre 45.

De préférence, on s'arrange pour que le premier matériau en poudre 35 est identique à celui constituant le support et que le deuxième matériau en poudre 45 est plus dur que le premier matériau.

De cette façon, on obtiendra un revêtement 13 plus dur que l'âme 15.

On comprend donc que de préférence, chaque couche résulte des deux sous-étapes suivantes :
- on forme à la surface de la base de la léchette 10 deux cordons annulaires 13a avec le deuxième matériau en poudre 45 par le fait qu'au cours de l'étape précédente, la tête optique 34 et la buse 38 sont décalées légèrement angulairement sur la circonférence par rapport à la surépaisseur localisée obtenue précédemment, et
- on remplit la zone 15a située entre les deux cordons annulaires 13a avec le premier matériau en poudre 35.

La réalisation de chaque cordon annulaire 13a s'effectue donc en réalisant en continu le dépôt par projection laser en effectuant une rotation du support 20 autour de l'axe longitudinal X-X', sans déplacer longitudinalement le support 20.

Le remplissage de la cuvette délimitée entre les deux cordons 13a avec le premier matériau en poudre 35 peut être réalisé selon plusieurs possibilités parmi lesquelles :
- soit par un décalage angulaire formant petit à petit un cordon annulaire parallèle aux cordons 13a réalisés dans le deuxième matériau 45, puis un décalage longitudinal à chaque nouveau tour pour former un nouveau cordon annulaire,
- soit par un décalage longitudinal (flèche 16 de la figure 2) pour remplir la zone 15a selon une ligne longitudinale entre les deux cordons 13a et par un décalage angulaire avant de former une nouvelle ligne longitudinale en sens inverse pour remplir l'espace entre les deux cordons 13a par formation de secteurs angulaires successifs.

La représentation de la figure 2 correspond à l'aboutissement de la réalisation de plusieurs couches annulaires pour former une partie de la pointe 14 de la léchette 10 tandis que la figure 3 représente la dernière étape de réalisation au cours de laquelle la couche finale est suffisamment étroite pour que les deux cordons annulaires 13a se rejoignent.

Ainsi, sur la figure 3, la léchette annulaire 10 est formée d'une base 12 surmontée d'une pointe 14 composée d'une âme 15 réalisée dans le même matériau que le support 20, et d'un revêtement 13 recouvrant toute l'âme 15 et réalisé dans un matériau différent de celui de l'âme 15.

Il faut noter que la présente invention recouvre également le cas dans lequel aucune base 12 n'est usinée au préalable dans le support 20, la réalisation de toute la hauteur de la léchette 10 étant effectuée par construction comme il a été décrit ci-dessus, la base 12 se réduisant dans ce cas (non représenté) à un tronçon annulaire de la surface extérieure du support 20.

Également, avec le même appareillage que celui présenté en relation avec les figures, on peut envisager de réaliser la construction de la pointe 14 de la léchette 10 en modifiant progressivement la composition du matériau depuis la surface extérieure formant le revêtement 13 vers l'âme 13 de la léchette 10 en faisant varier progressivement la proportion entre les premier et deuxième matériaux en poudre 35 et 45.

A cet effet, on active simultanément la première source et la deuxième source de matériaux en poudre 35, 45 de sorte que la buse 38 projette un mélange des deux matériaux en poudre, en prenant soin d'adapter les proportions afin que le revêtement 13 soit plus riche en deuxième matériau en poudre 45, afin de constituer un revêtement 13 plus dur que l'âme 15.

Dans ce cas, non représenté, la léchette annulaire 10 est formée d'une base 12 surmontée d'une pointe 14 dont la composition varie progressivement entre son âme 15 et sa surface 13.

En outre, la présente invention recouvre également le cas dans lequel on utilise une seule source de matériau en en poudre pour réaliser l'ensemble de la pointe 14 de la léchette 10.

On comprend que le procédé proposé selon la présente invention évite d'une part de réaliser un usinage délicat et d'autre part, lorsqu'on utilise deux matériaux différentes entre l'âme et la surface, d'effectuer un revêtement par un procédé de projection thermique qui ne peut pas être réalisé correctement dans certaines configurations géométriques.

Parmi les matériaux pouvant être employés, on utilise de préférence pour l'âme 15 un matériau en poudre métallique de même composition que le support 20, à savoir un alliage titane ou un alliage à base nickel et pour le revêtement 13, on utilise de préférence des matériaux durs et abrasifs. En particulier, pour le revêtement 13 on choisit parmi les métaux résistant à l'oxydation à chaud tels qu'un alliage de type MCrAlY (M étant un métal choisi parmi le nickel, le cobalt, le fer ou un mélange de ces métaux) ou un alliage à base de cobalt, chrome tungstène tel que le Stellite (marque déposée). En outre, on peut utiliser des céramiques comme le dioxyde de titane (TiO2), l'alumine (ALO2), la zircone (ZrO2) ou un mélange réalisé à partir de l'une d'entre elles.

En outre sur les dessins, on a représenté une léchette annulaire qui est dirigée radialement vers l'extérieur, mais on peut prévoir d'appliquer la présente invention également pour une léchette annulaire qui est dirigée radialement vers l'intérieur.

## Revendications

1. Procédé de réalisation d'une léchette annulaire (10) sur un support (20) thermomécanique pour un labyrinthe d'étanchéité, comportant l'étape suivante:
a) on fournit un support (20) de révolution autour d'un axe longitudinal présentant une base (12) de léchette (10) annulaire, et **caractérisé en ce qu'**il comporte en outre les étapes suivantes :
b) on fournit une buse (38) de projection apte à se déplacer par rapport au support (20) et une première source (35) d'un premier matériau en poudre identique à celui du support et une deuxième source (45) d'un deuxième matériau en poudre plus dur que le premier matériau, ladite première source (35) et ladite deuxième source (45) étant reliées à la buse (38) de projection,
c) on fournit une source laser reliée à une tête optique (34) apte à se déplacer par rapport au support (20) pour focaliser le faisceau laser sur un point de la surface du support (20),
d) on règle la tête optique (34) et la buse (38) sur un même point de la surface du sommet de la base (12) de la léchette (10),
e) on active la source laser et les sources (35;45) de matériau en poudre, ce par quoi on forme un bain de fusion localisé au niveau dudit point, dans lequel est injecté le matériau en poudre d'où il en résulte la formation d'une surépaisseur localisée ;
f) on règle la tête optique (34) et la buse (38) sur un autre point de la surface du sommet de la base (12) adjacent à ladite surépaisseur localisée et on retourne à l'étape e) jusqu'à la formation d'une couche sur sensiblement toute la largeur du sommet de la base (12) ;
g) on construit au moins une portion de la pointe (14) de la léchette (10) par le dépôt successif de couches annulaires de plus en plus étroites en direction longitudinale (16) sur le sommet de la base (12), chaque couche résultant de la réalisation des étapes d) à f) et comprenant, à ses deux bords, un cordon annulaire (13a) appartenant au revêtement (13) de la pointe (14) de la léchette (10) et constitué majoritairement du deuxième matériau, et une zone (15a) remplissant l'espace délimité entre les deux cordons annulaires (13a) et appartenant à l'âme (15) de la pointe (14) de la léchette (10), ladite zone (15a) étant constituée majoritairement du premier matériau .

2. Procédé selon la revendication précédente, **caractérisé en ce que** l'on réalise les étapes d) à f) tant que toute la surface du sommet de la base (12) n'est pas revêtue d'une couche et **en ce que** pendant l'étape g) on construit la pointe (14) de la léchette (10) par le dépôt successif de couches de plus en plus étroites en direction longitudinale (16) sur toute la surface du sommet de la base (12), chaque couche résultant de la réalisation des étapes d) à f).

3. Procédé selon la revendication 1 ou 2, **caractérisé en ce que** pendant l'étape f), on parcourt la surface du sommet de la base (12) de la léchette (10) selon une direction longitudinale (16) avant de changer de secteur angulaire.

4. Procédé selon l'une quelconque des revendications précédentes, **caractérisé en ce que** au cours de l'étape f) la source laser et les sources (35;45) de matériau en poudre restent activées.

5. Procédé selon l'une quelconque des revendications 1 à 4, **caractérisé en ce qu'**au cours de l'étape g) chaque couche résulte des sous-étapes suivantes :
g1) on forme à la surface de la base (12) de la léchette (10) les deux cordons annulaires (13a) avec le deuxième matériau en poudre (45) par le fait qu'au cours de l'étape f) la tête optique (34) et la buse (38) sont décalées angulairement sur la circonférence par rapport à la surépaisseur localisée obtenue précédemment, et
g2) on remplit la zone (15a) située entre les deux cordons annulaires (13a) avec le premier matériau en poudre (35).

6. Procédé selon l'une quelconque des revendications 1 à 4, **caractérisé en ce que** pendant l'étape e) on active simultanément la première source (35) et la deuxième source (45) de matériaux en poudre de sorte que la buse (38) projette un mélange des premier et deuxième matériaux en poudre, la proportion entre les premier et deuxième matériaux en poudre variant afin de construire la pointe (14) de la léchette en modifiant progressivement la composition entre le revêtement (13), plus riche en deuxième matériau, et l'âme (15).

7. Procédé selon l'une quelconque des revendications précédentes, **caractérisé en ce que** la tête optique (34) et la buse (38) de projection sont solidaires l'une de l'autre dans un même ensemble de projection dont la position est réglable par rapport au support (20).

8. Pièce thermomécanique comprenant au moins une léchette (10) annulaire destinée à un labyrinthe d'étanchéité et montée sur un support (20), ladite léchette (10) étant obtenue par le procédé selon l'une quelconque des revendications précédentes, la pièce thermomécanique formant ledit support (20), la léchette (10) annulaire 10 étant formée d'une base (12) surmontée d'une pointe (14), **caractérisée en ce que** la pointe (14) est composée d'une âme (15), constituée majoritairement du premier matériau qui est le même matériau que celui du support (20), et d'un revêtement (13) recouvrant toute l'âme (15) et constitué majoritairement du deuxième matériau qui est plus dur que le premier matériau.

9. Pièce thermomécanique selon la revendication 8, **caractérisée en ce que** l'âme (15) est réalisée dans le premier matériau et **en ce que** le revêtement (13) est réalisé dans le deuxième matériau.

10. Pièce thermomécanique selon la revendication 8, **caractérisée en ce que** la composition de la pointe (14) varie progressivement entre son âme (15) et sa surface formant le revêtement (13).

11. Pièce thermomécanique selon l'une quelconque des revendications 8 à 10, **caractérisée en ce que** la léchette (10) annulaire est dirigée radialement vers l'extérieur.

12. Pièce thermomécanique selon l'une quelconque des revendications 8 à 11, **caractérisée en ce qu'**elle constitue le rotor d'une turbomachine.

13. Turbomachine comprenant une pièce thermomécanique selon l'une quelconque des revendications 8 à 12.

## Claims

1. A method of making an annular wiper (10) on a thermomechanical support (20) for a sealing labyrinth, comprising the following step:
a) providing a support (20) that is circularly symmetrical about a longitudinal axis and that presents an annular base (12) for a wiper (10), and **characterized in that** it further comprises the following steps:
b) providing a spray nozzle (38) suitable for moving relative to the support (20) and a first source (35) of a first powder material identical to the material of the support, and a second source (45) of a second powder material that is harder than the first material, said first source (35) and said second source (45) being connected to the spray nozzle (38),
c) providing a laser source connected to an optical head (34) suitable for moving relative to the support (20) to focus the laser beam on a point of the surface of the support (20),
d) aiming the optical head (34) and the nozzle (38) at a common point of the surface of the top of the base (12) of the wiper (10),
e) activating the laser source and the sources (35 ; 45) of the powder material so as to form a localized melt at said point, into which the powder material is injected, thereby forming a localized region of extra thickness;
f) aiming the optical head (34) and the nozzle (38) at another point of the surface of the top of the base (12) adjacent to said localized region of extra thickness and returning to step e) until a layer has been formed over substantially the entire width of the top of the base (12);
g) building at least a fraction of the tip (14) of the wiper (10) by successively depositing annular layers that become narrower and narrower in the longitudinal direction (16) on the top of the base (12), each layer being the result of performing steps d) to f), and comprising, at its both edges, an annular bead (13a) belonging to the coating (13) of the tip (14) of the wiper (10) and constituted in the majority with the second material, and a zone (15a) filling the space circumscribed between the two annular beads (13a) and belonging to the core (15) of the tip (14) of the wiper (10), said zone (15a) being constituted in majority with the first material.

2. A method according to claim 1, **characterized in that** the steps d) to f) are performed as long as the entire surface of the top of the base (12) has not been coated with a layer, and **in that**, during step g), the tip (14) of the wiper (10) is built up by successively depositing layers that are narrower and narrower in the longitudinal direction (16) over the entire surface of the top of the base (12), each layer resulting from performing steps d) to f).

3. A method according to claim 1 or 2, **characterized in that,** during step f), the surface of the top of the base (12) of the wiper (10) is followed in a longitudinal direction (16) prior to changing angular sector.

4. A method according to any one of the preceding claims, **characterized in that,** during step f), the laser source and the sources (35; 45) of powder material remain activated.

5. A method according to any one of the claims 1 to 4, **characterized in that,** during step g), each layer results from the following sub-steps:
g1) forming two annular beads (13a) on the surface of the base (12) of the wiper (10) using the second powder material by moving the optical head (34) and the nozzle (38) during step f) angularly over the circumference relative to the previously-obtained localized region of extra thickness; and
g2) filling the zone (15a) situated between the two annular beads (13a) with the first powder material (35).

6. A method according to any one of the claims 1 to 4, **characterized in that,** during step e), both the first source (35) and the second source (45) of powder materials are activated simultaneously so that the nozzle (38) projects a mixture of the first and second powder materials, the proportion between the first and second powder materials varying so as to build the tip (14) of the wiper by gradually modifying the composition between the coating (13) with a higher second material content, and the core (15).

7. A method according to any one of the preceding claims, **characterized in that** the optical head (34) and the spray nozzle (38) are secured to each other in a common projection assembly of position that can be adjusted relative to the support (20).

8. A thermomechanical part comprising at least one annular wiper (10) for a sealing labyrinth and mounted on a support (20), said wiper (10) being obtained by the method according to any one of the preceding claims, the thermomechanical part forming said support (20), the annular wiper (10) being constituted by a base (12) surmounted by a tip (14), **characterized in that** the tip (14) is made up of a core (15) made using in the majority the same first material as the support (20) and a coating (13) covering the entire core (15) and made in the majority of the second material which is harder than the first material.

9. A thermomechanical part according to claim 8, **characterized in that** the core (15) is made up with the first material, and **in that** the coating (13) is made up with the second material.

10. A thermomechanical part according to claim 8, **characterized in that** the composition of the tip (14) varies progressively between its core (15) and its surface forming the coating (13).

11. A thermomechanical part according to any one of the claims 8 to 10, **characterized in that** the annular wiper (10) is directed radially outwards.

12. A thermomechanical part according to any one of the claims 8 to 11, **characterized in that** it constitutes the rotor of a turbomachine.

13. A turbomachine comprising a thermomechanical part according to any one of the claims 8 to 12.

## Patentansprüche

1. Verfahren zum Ausbilden einer ringförmigen Dichtungszunge (10) an einem thermomechanischen Träger (20) für eine Labyrinthdichtung, das den folgenden Schritt umfaßt:
a) Bereitstellen eines um eine Längsachse umlaufenden Trägers (20), der einen Sockel (12) der ringförmigen Dichtungszunge (10) aufweist,
und das **dadurch gekennzeichnet ist, daß** es ferner die folgenden Schritte umfaßt:
b) Bereitstellen einer Spritzdüse (38), die geeignet ist, sich gegenüber dem Träger (20) zu bewegen, sowie einer ersten Quelle (35) eines ersten pulverförmigen Materials, das mit dem des Trägers identisch ist, und einer zweiten Quelle (45) eines zweiten pulverförmigen Materials, welches härter als das erste Material ist, wobei die erste Quelle (35) und die zweite Quelle (45) mit der Spritzdüse (38) verbunden sind,
c) Bereistellen einer Laserquelle, die mit einem optischen Kopf (34) verbunden ist, welcher geeignet ist, sich gegenüber dem Träger (20) zu bewegen, um den Laserstrahl auf einen Punkt der Oberfläche des Trägers (20) zu fokussieren,
d) Einstellen des optischen Kopfes (34) und der Düse (38) auf einen gleichen Punkt der Oberfläche des Scheitels des Sockels (12) der Dichtungszunge (10),
e) Aktivieren der Laserquelle und der Quellen (35; 45) des pulverförmigen Materials, wodurch im Bereich des Punktes ein örtlich begrenztes Schmelzbad gebildet wird, in das das pulverförmige Material eingespritzt wird, wodurch es zur Bildung einer örtlich begrenzten Überdicke kommt,
f) Einstellen des optischen Kopfes (34) und der Düse (38) auf einen anderen Punkt der Oberfläche des Scheitels des Sockels (12), welcher der örtlich begrenzten Überdicke benachbart ist, und Zurückkehren zu Schritt e) bis zur Bildung einer Schicht über im wesentlichen die gesamte Breite des Scheitels des Sockels (12),
g) Ausbilden wenigstens eines Abschnittes der Spitze (14) der Dichtungszunge (10) durch sukzessives Abscheiden von in Längsrichtung (16) immer schmaleren ringförmigen Schichten auf dem Scheitel des Sockels (12),
wobei jede Schicht aus der Durchführung der Schritte d) bis f) hervorgeht und an ihren beiden Rändern einen ringförmigen Strang (13a) aufweist, der zu der Beschichtung (13) der Spitze (14) der Dichtungszunge (10) gehört und hauptsächlich aus dem zweiten Material besteht, und wobei ein Bereich (15a) den zwischen den beiden ringförmigen Strängen (13a) begrenzten Raum ausfüllt und zum Kern (15) der Spitze (14) der Dichtungszunge (10) gehört, wobei der Bereich (15a) hauptsächlich aus dem ersten Material besteht.

2. Verfahren nach dem vorhergehenden Anspruch, **dadurch gekennzeichnet, daß** die Schritte d) bis f) durchgeführt werden, solange nicht die gesamte Oberfläche des Scheitels des Sockels (12) mit einer Schicht überzogen ist, und daß während des Schrittes g) die Spitze (14) der Dichtungszunge (10) durch sukzessives Abscheiden von in Längsrichtung (16) immer schmaleren Schichten auf der gesamten Oberfläche des Scheitels des Sockels (12) gebildet wird, wobei jede Schicht aus der Durchführung der Schritte d) bis f) hervorgeht.

3. Verfahren nach Anspruch 1 oder 2, **dadurch gekennzeichnet, daß** während des Schrittes f) die Oberfläche des Scheitels des Sockels (12) der Dichtungszunge (10) in einer Längsrichtung (16) überfahren wird, bevor der Winkelsektor gewechselt wird.

4. Verfahren nach einem der vorhergehenden Ansprüche, **dadurch gekennzeichnet, daß** im Laufe des Schrittes f) die Laserquelle (30) und die Quellen (35; 45) des pulverförmigen Materials aktiviert bleiben.

5. Verfahren nach einem der Ansprüche 1 bis 4, **dadurch gekennzeichnet, daß** im Laufe des Schrittes g) jede Schicht aus den folgenden Unterschritten hervorgeht:
g1) auf der Oberfläche des Sockels (12) der Dichtungszunge (10) werden die zwei ringförmigen Stränge (13a) mit dem zweiten pulverförmigen Material (45) **dadurch** gebildet, daß im Laufe des Schrittes f) der optische Kopf (34) und die Düse (38) gegenüber der zuvor erhaltenen, örtlich begrenzten Überdicke über den Umfang winkelig versetzt werden, und
g2) der zwischen den beiden ringförmigen Strängen (13a) befindliche Bereich (15a) wird mit dem ersten pulverförmigen Material (35) gefüllt.

6. Verfahren nach einem der Ansprüche 1 bis 4, **dadurch gekennzeichnet, daß** während des Schrittes e) die erste Quelle (35) und die zweite Quelle (45) pulverförmiger Materialien gleichzeitig aktiviert werden, so daß die Düse (38) eine Mischung aus dem ersten und dem zweiten pulverförmigen Material aufspritzt, wobei das Verhältnis zwischen dem ersten und dem zweiten pulverförmigen Material variiert, um die Spitze (14) der Dichtungszunge durch schrittweise Änderung der Zusammensetzung zwischen der an zweitem Material reicheren Beschichtung (13) und dem Kern (15) auszubilden.

7. Verfahren nach einem der vorhergehenden Ansprüche, **dadurch gekennzeichnet, daß** der optische Kopf (34) und die Spritzdüse (38) in einer gleichen Spritzeinheit, deren Position gegenüber dem Träger (20) einstellbar ist, fest miteinander verbunden sind.

8. Thermomechanisches Teil mit wenigstens einer für eine Labyrinthdichtung bestimmten und an einem Träger (20) angebrachten ringförmigen Dichtungszunge (10), wobei die Dichtungszunge (10) mittels des Verfahrens nach einem der vorhergehenden Ansprüche erhalten wird, wobei das thermomechanische Teil den Träger (20) bildet, wobei die ringförmige Dichtungszunge (10) von einem Sockel (12) gebildet ist, auf dem eine Spitze (14) angeordnet ist, **dadurch gekennzeichnet, daß** die Spitze (14) von einem Kern (15), der hauptsächlich aus dem ersten Material besteht, welches das gleiche Material wie das des Trägers (20) ist, sowie von einer Beschichtung (13) gebildet ist, welche den gesamten Kern (15) überzieht und hauptsächlich aus dem zweiten Material besteht, das härter als das erste Material ist.

9. Thermomechanisches Teil nach Anspruch 8, **dadurch gekennzeichnet, daß** der Kern (15) aus dem ersten Material besteht und daß die Beschichtung (13) aus dem zweiten Material besteht.

10. Thermomechanisches Teil nach Anspruch 8, **dadurch gekennzeichnet, daß** die Zusammensetzung der Spitze (14) zwischen ihrem Kern (15) und ihrer die Beschichtung (13) bildenden Oberfläche schrittweise variiert.

11. Thermomechanisches Teil nach einem der Ansprüche 8 bis 10, **dadurch gekennzeichnet, daß** die ringförmige Dichtungszunge (10) radial nach außen gerichtet ist.

12. Thermomechanisches Teil nach einem der Ansprüche 8 bis 11, **dadurch gekennzeichnet, daß** es den Rotor einer Turbomaschine bildet.

13. Turbomaschine mit einem thermomechanischen Teil nach einem der Ansprüche 8 bis 12.
